## Europäisches Patentamt

## European Patent Office

## Office européen des brevets

(19)

(11) Veröffentlichungsnummer: **0 071 098**
**B1**

(12) # EUROPÄISCHE PATENTSCHRIFT

(45) Veröffentlichungstag der Patentschrift:
15.10.86

(51) Int. Cl.⁴: **C 08 L 25/12**

(21) Anmeldenummer: **82106341.9**

(22) Anmeldetag: **15.07.82**

(54) Thermoplastische Formmasse.

(30) Priorität: 25.07.81 DE 3129472

(43) Veröffentlichungstag der Anmeldung:
09.02.83 Patentblatt 83/6

(45) Bekanntmachung des Hinweises auf die Patenterteilung:
15.10.86 Patentblatt 86/42

(84) Benannte Vertragsstaaten:
BE DE FR GB NL

(56) Entgegenhaltungen:
DE-A-1 911 882
DE-A-2 826 925
DE-B-1 260 135

Die Akte enthält technische Angaben, die nach dem Eingang der Anmeldung eingereicht wurden und die nicht in dieser Patentschrift enthalten sind.

(73) Patentinhaber: BASF Aktiengesellschaft, Carl-Bosch- Strasse 38, D-6700 Ludwigshafen (DE)

(72) Erfinder: Brandstetter, Franz, Dr., Ritterbuechel 45, D-6730 Neustadt (DE)
Erfinder: Hambrecht, Juergen, Dr., Werderstrasse 30, D-6900 Heidelberg (DE)
Erfinder: Stephan, Rudolf, Dr., Homburger Strasse 19, D-6700 Ludwigshafen (DE)
Erfinder: Overhoff, Heinz- Juergen, Dr., Max-Slevogt- Strasse 13B, D-6710 Frankenthal (DE)
Erfinder: Schwaab, Josef, Dr., Rieslingweg 8, D-6735 Maikammer (DE)
Erfinder: Bernhard, Claus, Dr., Uhlandstrasse 11, D-6719 Eisenberg (DE)
Erfinder: Swoboda, Johann, Dr., Sternstrasse 122, D-6700 Ludwigshafen (DE)
Erfinder: Echte, Adolf, Dr., Leuschnerstrasse 42, D-6700 Ludwigshafen (DE)

EP 0 071 098 B1

**Beschreibung**

Die Erfindung betrifft eine schlagfeste thermoplastische Formmasse aus einer Mischung von einen Styrol-Acrylnitril-Copolymerisat und einem Pfropfcopolymerisat von Styrol/Acrylnitril auf Polyacrylsäureester.

Zum Stand der Technik nennen wir:

(1) DE–AS–12 60 135
(2) DE–AS–19 11 882 und
(3) DE–AS–28 26 925.

Die Herstellung schlagfester thermoplastischer Massen durch Abmischen einer Hartkomponente A, bestehend aus einem Copolymerisat von Styrol und Acrylnitril, mit einer Weichkomponente B - bestehend aus einem Pfropfcopolymerisat von einem Gemisch aus Styrol und Acrylnitril auf Polyacrylsäureester - ist aus (1) bekannt. Solche Formmassen werden auch als ASA-Polymerisate bezeichnet.

Der als Stammpolymerisat eingesetzte Polyacrylsäureester wird dabei durch Emulsionscopolymerisation von Acrylsäureestern von Alkanolen mit 4 bis 8 C-Atomen mit dem Acrylsäureester des Tricyclodecenylalkohols hergestellt. Dabei entstehen Latexteilchen mit einem Durchmesser von etwa 0,1 µm. Die anschließende Pfropfcopolymerisation wird vorzugsweise in Emulsion durchgeführt, wobei ein Gemisch von Styrol/Acrylnitril auf den Stammpolymerisatlatex der Polyacrylsäureester gepfropft wird.

Die so hergestellten Formmassen zeichnen sich gegenüber ähnlichen Formmassen mit Polyacrylsäureester als Stammpolymerisat, die aber keinen Tricyclodecenylalkohol in der Alkoholkomponente enthalten, durch höhere Steifigkeit und bessere Festigkeit aus. Gegenüber schlagfesten Formmassen, deren Stammpolymerisat in der Weichkomponente aus Polydienen besteht, den sogenannten ABS-Formmassen, zeigen sie eine verbesserte Alterungsbeständigkeit.

Aus (2) sind Formmassen bekannt, die als Weichkomponente B ein Pfropfcopolymerisat von Acrylsäureestern aus Alkoholen mit 4 bis 8 C-Atomen und Styrol/Acrylnitril mit einem mittleren Teilchendurchmesser zwischen 0,15 und 0,8 µm und mit enger Teilchengrößenverteilung besitzen. Insbesondere wird in (2) ein sogenanntes Saatlatexverfahren beschrieben, bei welchem durch Vorlage einer kleinen Menge eines feinteiligen Stammpolymerisates (Teilchengröße kleiner 0,12 µm) und Zugabe von Monomeren und Emulgatoren derart, daß keine Teilchenneubildung erfolgt, ein großteiliger Polymerisatlatex erhalten wird. Die Teilchengröße, Tg, wird bestimmt durch das Verhältnis Monomerzugabe zu Saat, wie dem Beispiel, Spalte 4, Zeilen 22 bis 43 zu entnehmen ist. Die angegebenen Tg-Werte sind nicht mit der Ultrazentrifuge bestimmt worden, so daß auch Q-Werte nicht angegeben sind. Das Meßverfahren mittels der analytischen Ultrazentrifuge wurde erst 3 Jahre nach dem Zeitpunkt der Abfassung von (2) entwickelt.

Thermoplastische Formmassen mit einer breiten Teilchengrößenverteilung im Bereich von 0,050 - 0,5. µm sind in (3) beschrieben.

In (3) wurde das aus (2) bekannte Verfahrensprinzip angewandt, um die zweite, großteilige Komponente B herzustellen (vgl. Seite 16, Zeile 15 bis Seite 17, Zeile 14). Als Resultat wurde ein großteiliges Pfropfmischpolymerisat B mit einer Teilchengrößenverteilung Q gleich 0,1 erhalten (vgl. die Herstellung des großteiligen Pfropfmischpolymerisates B, Seite 24, Zeile 29 bis Seite 25 Zeile 10 in (3). Es ist daher anzunehmen, daß ähnliche Werte für Q auch in den Versuchen erhalten worden sind, die in den Beispielen von (2) beschrieben sind.

Die bekannten Formmassen besitzen zwar eine verbesserte Alterungsbeständigkeit, Einfärbbarkeit und Zähigkeit, doch reicht deren Alterungsbeständigkeit und vor allem deren Fließeigenschaft häufig nicht aus.

Der Erfindung lag also die Aufgabe zu Grunde, thermoplastische Formmassen mit guter Alterungsbeständigkeit und einer verbesserten Fließeigenschaft zu schaffen.

Diese Aufgabe wird durch Formmassen gemäß Patentanspruch 1 gelöst.

Nachstehend wird der Aufbau der erfindungsgemäßen Formmasse aus den Komponenten A und B, die Herstellung der Komponenten und der Formmasse beschrieben:

**Komponente A:**

Die Komponente A ist in einem Anteil von 50 bis 90 Gew.%, vorzugsweise 55 bis 80 Gew.%, jeweils bezogen auf die Summe A + B, in der erfindungsgemäßen Formmasse vorhanden.

Für die Komponente B gelten die entsprechenden Anteile zu 100 %.

Die in den erfindungsgemäßen Mischungen enthaltene Komponente (A) ist eine Hartkomponente aus einem oder mehreren Copolymerisaten von Styrol und/oder α-Methylstyrol mit Acrylnitril. Der Acrylnitril-Gehalt in diesen Copolymerisaten der Hartkomponente (A) soll 20 bis 40 Gew.%, bezogen auf das jeweilige Copolymerisat der Hartkomponente, betragen. Zu dieser Hartkomponente (A) zählen auch, wie nachstehend noch erläutert, die bei der Pfropfmischpolymerisation zur Herstellung der Komponente (B) entstehenden freien, nicht gepfropften Styrol/Acrylnitril-Copolymerisate. Je nach den bei der Pfropfmischpolymerisation für die Herstellung des Pfropfmischpolymerisates (B) gewählten Bedingungen kann es möglich sein, daß bei der Pfropfmischpolymerisation schon ein hinreichender Anteil an Hartkomponente (A) gebildet worden ist. Im vorliegenden Fall ist es jedoch nötig, die bei der Pfropfmischpolymerisation erhaltenen Produkte mit zusätzlicher, separat hergestellter Hartkomponente (A) zu mischen.

Bei der separat hergestellten Hartkomponente (A) kann es sich um ein Styrol/Acrylnitril-Copolymerisat, ein

2

α-Methylstyrol/Acrylnitril-Copolymerisat oder ein α-Methylstyrol/ Styrol/Acrylnitril-Terpolymerisat handeln. Diese Copolymerisate können einzeln oder auch in Mischung miteinander für die Hartkomponente eingesetzt werden, so daß es sich bei der Hartkomponente (A) der erfindungsgemäßen Mischungen beispielsweise um eine Mischung aus einem Styrol/Acrylnitril-Copolymerisat und einem α-Methylstyrol/Acrylnitril-Copolymerisat handeln kann. In dem Fall, in dem die Hartkomponente (A) der erfindungsgemäßen Massen aus einer Mischung von einem Styrol/Acrylnitril-Copolymerisat und einem α-Methylstyrol/Acrylnitril-Copolymerisat besteht, soll der Acrylnitril-Gehalt der beiden Copolymerisate nicht mehr als 10 Gew.%, vorzugsweise nicht mehr als 5 Gew.%, bezogen auf das Copolymerisat, voneinander abweichen. Die Hartkomponente (A) der erfindungsgemäßen Formmasse kan jedoch auch nur aus einem einzigen Styrol/Acrylnitril-Copolymerisat bestehen, nämlich dann, wenn bei der Pfropfmischpolymerisation zur Herstellung der Komponente (B) als auch bei der Herstellung der zusätzlichen, separat hergestellten Hartkomponenten von dem gleichen Monomer-Gemisch aus Styrol und Acrylnitril ausgegangen wird.

Die Hartkomponente (A) kann nach den herkömmlichen Methoden erhalten werden. So kann die Copolymerisation des Styrols und/oder α-Methylstyrols mit dem Acrylnitril in Masse, Lösung, Suspension oder wäßriger Emulsion durchgeführt werden. Die Hartkomponente (A) hat vorzugsweise eine Viskositätszahl von 40 bis 100, insbesondere von 50 bis 85.

**Komponente B:**

Die Herstellung des erfindungsgemäß einzusetzenden Pfropfmischpolymerisats (B) erfolgt in zwei Stufen. Hierzu wird zunächst die Pfropfgrundlage (B₁) hergestellt.

Zunächst wird in der Grundstufe ein Latex hergestellt. Als Acrylsäurealkylester kommen dabei Monomere in Frage, die zu Acrylsäureester-Polymerisaten mit einer Glasübergangstemperatur, $T_g$, unter 0°C führen. Das Acrylsäureester-Polymerisat soll vorzugsweise eine Glasübergangstemperatur unter –20°C, insbesondere unter –30°C haben.

Die Ermittlung der Glasübergangstemperatur des Acrylsäureester-Polymerisates kann z. B. nach der DSC-Methode (K.H. Illers, Makromol. Chemie 127 (1969), S. 1) erfolgen. Für die Herstellung der Acrylsäureester-Polymerisate kommen insbesondere die Acrylsäurealkylester mit 2 bis 8 Kohlenstoffatomen, vorzugsweise mit 4 bis 8 Kohlenstoffatomen, im Alkylrest in Betracht. Als Acrylsäurealkylester, die zur Herstellung der Acrylsäureester-Polymerisate geeignet sind, seien besonders Acrylsäure-n-butylester und Acrylsäureethylhexylester genannt. Die Acrylsäureester können allein oder auch in Mischung eingesetzt werden.

Die Acrylsäurealkylester können zumindest teilweise durch mindestens ein Comonomeres, wie Styrol, Vinylchlorid, Alkylester der Methacrylsäure oder Acrylnitril ersetzt werden. Dabei soll der Anteil an Comonomeren 1 bis 40 Gew.%, vorzugsweise 5 bis 30 Gew.%, bezogen auf Monomere(s), betragen.

Zusätzlich werden übliche vernetzend wirkende, mindestens 2 funktionelle Gruppen aufweisende Monomere mitverwendet. Hierzu wird gegebenenfalls die Polymerisation der Acrylsäureester und ggf. der Comonomeren in Gegenwart von 0,5 bis 10 Gew.%, vorzugsweise 1 bis 5 Gew.%, bezogen auf die Gesamtmenge an Monomeren und Comonomeren, zumindest eines die Vernetzung bewirkenden Monomeren durchgeführt. Als solche bi- oder mehrfunktionelle Vernetzungs-Monomere eignen sich Monomere, die vorzugsweise zwei, gegebenenfalls auch mehr, zur Copolymerisation befähigte ethylenische Doppelbindungen enthalten. Geeignete Vernetzungs-Monomere sind beispielsweise Divinylbenzol, Diallylmaleat. Als besonders günstiges Vernetzungs-Monomeres hat sich der Acrylsäureester des Tricyclodecenylalkohols erwiesen (vgl. DE–PS–12 60 135).

Die Polymerisation wird in Gegenwart von mindestens einem wasserunlöslichen organischen Initiator durchgeführt. Dabei kommen insbesondere in Frage: Diacylperoxide und Perester. Hierbei kann es sich beispielsweise handeln um:

Acetylcyclohexansulfonyl-peroxid, Peroxy-dicarbonate, wie Diisopropyl-peroxydicarbonat, t-Amylperneodecanoat, t-Butylperneodecanoat, Bis-(2,4-dichlorbenzoyl)-peroxid, t-Butylperpivalat, Bis-(3.5.5-trimethylhexanoyl)-peroxid, Bis-(o-toluoyl)-peroxid, Didecanoylperoxid, Dioctanoylperoxid, Dilauroylperoxid, Succinylperoxid, Diacetylperoxid, Dibenzoylperoxid, t-Butyl-per-2-äthylhexanoat, Bis-(4-chlorbenzoyl)-peroxid, t-Butylperisobutyrat, t-Butylpermaleinat, 1.1-Di-(t-butylperoxy)-3.5.5-trimethyl-cyclohexan, 1.1-Di-(t-butylperoxy)-cyclohexan, t-Butylperoxy-isopropylcarbonat, t-Butyl-per-3.5.5-trimethylhexanol, 2.5-Dibenzoylperoxy-2.5-dimethylhexan, t-Butylperacetat, t-Butylperbenzoat, 2.2-Bis-(t-butylperoxy)-butan, 2.2-Bis-(t-butylperoxy)-propan, Dicumylperoxid, 3-t-Butylperoxy-3-phenylphthalid, 2.5-Di-butylperoxy-2.5-dimethylhexan, α,α'-Di-(t-butylperoxy-isopropyl)-benzol, Di-t-butylperoxid und 2.5-(Di-t-butylperoxy)-2.5-dimethyl-hexin-3.

Bevorzugt wird Acetylcyclohexansulfonylperoxid, t-Butylperneodecanoat, t-Butylperpivalat, Dilauroylperoxid und Dibenzoylperoxid verwendet. Es sind aber auch Kombinationen verschiedener Initiatoren möglich wie t-Butylperneodecanoat und t-Butylperpivalat oder Acetylcyclohexansulfonylperoxid und Dilauroylperoxid.

Die Initiatoren werden in Mengen von 0,01 bis 0,9 vorzugsweise von 0,03 bis 0,3 Gew.%, bezogen auf Monomere(s), verwendet. Dabei kann die gesamte Initiatormenge oder ein Teil (in der Regel 1/6 bis zu 1/3) vorgelegt werden.

Der Initiator kann aber auch, dies ist bevorzugt, teilweise oder in Stufen zur Reaktionslösung gegeben werden (Dosierung). Dazu kann der Initiator in einem inerten Lösungsmittel gelöst oder in Form einer Mikrosuspension verwendet werden.

Es können die üblichen vorzugsweise anionische Emulgatoren verwendet werden, wie Alkalisalze von Alkyl- oder Arylsulfonsäuren, Alkylsulfate, Fettalkoholsulfonate, Salze von Fettsäuren nit 10 bis 30 Kohlenstoffatomen oder Harzseifen. Bevorzugt werden Alkylsulfate. Ganz besonders geeignet ist Na-dodecylsulfat und $C_{12}$- bis $C_{18}$-Alkylsulfat. Die Emulgatoren werden in Mengen von 0,1 bis 5, vorzugsweise 0,6 bis 2 Gew.%, bezogen auf Monomere(s) eingesetzt.

Als langkettige Alkohole kommen aliphatische Alkohole mit 10 bis 30 C-Atomen in der Kette in Betracht. Es kann sich dabei beispielsweise um Laurylalkohol, Cetylalkohol, Oleylalkohol und Stearylalkohol handeln. Der Alkohol wird in Mengen von 0,1 bis 3, vorzugsweise 0,2 bis 2 Gew.% bezogen auf Monomere(s) angewendet.

Die Polymerisation wird unter üblichen Bedingungen von Druck und Temperatur, durchgeführt; es werden Temperaturen von 30 bis 90°C bevorzugt. Es werden übliche Verhältnisse von Wasser : Monomer in Bereich von 4 : 1 bis 2 : 3 angewendet.

Zur Durchführung der Polymerisation wird zunächst aus Wasser, dem Emulgator und dem langkettigen Alkohol eine Mischung hergestellt, die oberhalb der Schmelztemperatur des Alkohols 5 bis 30 Minuten gerührt wird. Danach stellt man gegebenenfalls die gewünschte Polymerisationstemperatur ein. Hierauf beginnt man unmittelbar, d.h. ohne vorherige zusätzliche Homogenisierung mit der Polymerisation. Dies kann z. B. bevorzugt dadurch geschehen, daß man die Gesamtmenge an Monomeren (m) und gegebenenfalls einen Anteil (von z. B. 1/6 bis max. 50 Gew.%) des Initiators vorlegt, d.h. in die vorstehend beschriebene Mischung einbringt, und die Gesamtmenge oder den Rest des Initiators in Lösung oder in Mikrosuspension nach Einsetzen der Polymerisation zudosiert, um einen kontinuierlichen Polymerisationsverlauf zu erhalten. Andererseits kann man aber auch die gesamte Initiatormenge und nur einen Teil an Monomeren(m) vorlegen und die restliche Monomermenge zudosieren. Es ist ferner möglich, die Gesamtmenge an Initiator vorzulegen und die Gesamtmenge an Monomeren(m) zulaufen zu lassen. Gleichermaßen kann eine Teilmenge an Monomeren(m) und mindestens eine Teilmenge Initiator vergelegt werden, um zum Erfolg zu gelangen. Auf diese Art und Weise ist eine steuerbare Polymerisationreaktion ohne Vorhomogenisierung des (der) Monomeren möglich, die je nach Kühlkapazität in 1 bis 10 Stunden abgelaufen ist, wobei ein quantitativer Umsatz des (der) Monomeren erfolgt. Auf die beschriebene Art und Weise können Latexteilchen eines mittleren Teilchendurchmessers ($d_{50}$-Wert) von $\geq 0,5$ µm erhalten werden.

Der mittlere Teilchendurchmesser der Pfropfgrundlage soll $\geq 0,5$ µm in den erfindungsgemäßen Formmassen sein.

Bevorzugt liegt er im Bereich von 0,6 - 0,8 µm. Die Verteilung der Durchmesser der Teilchen ist definiert durch

$$Q = \frac{d_{90} - d_{10}}{d_{50}}$$

Die Werte Q für die Komponente ($B_1$) sollen im Bereich von $Q \geq 0,6$ liegen, insbesondere von 0,7 bis 1,5.

Zur Herstellung des Pfropfmischpolymerisats (B) aus (B1) wird dann in einem zweiten Schritt in Gegenwart des so erhaltenen Latex des Acrylsäureester-Polymerisats ein Monomeren-Gemisch aus Styrol und Acrylnitril polymerisiert, wobei das Gewichtsverhältnis von Styrol zu Acrylnitril in dem Monomeren-Gemisch im Bereich von 88 : 12 bis 65 : 35, vorzugsweise bei 70 : 30, liegen soll. Es ist vorteilhaft, diese Pfropfmischpolymerisation von Styrol und Acrylnitril auf das als Pfropfgrundlage dienende Acrylsäureester-Polymerisat wieder in wäßriger Emulsion unter den üblichen, oben aufgeführten Bedingungen durchzuführen. Die Pfropfmischpolymerisation kann zweckmäßig im gleichen System erfolgen wie die Polymerisation zur Herstellung der Pfropfgrundlage ($B_1$), wobei, falls notwendig, weiterer Emulgator, langkettiger Alkohol und Initiator zugegeben werden kann. Das aufzupfropfende Monomeren-Gemisch aus Styrol und Acrylnitril kann dem Reaktionsgemisch auf einmal, absatzweise in mehreren Stufen oder vorzugsweise kontinuierlich während der Polymerisation zugegeben werden. Die Pfropfmischpolymerisation des Gemisches von Styrol und Acrylnitril in Gegenwart des Acrylsäureester-Polymerisats wird so geführt, daß ein Pfropfgrad von 20 bis 60 Gew.%, vorzugsweise von 40 bis 50 Gew.%, im Pfropfmischpolymerisat (B) resultiert. Da die Pfropfausbeute bei der Pfropfmischpolymerisation nicht 100-%ig ist, muß eine etwas größere Menge des Monomeren-Gemisches aus Styrol und Acrylnitril bei der Pfropfmischpolymerisation eingesetzt werden, als es dem gewünschten Pfropfgrad entspricht. Die Steuerung der Pfropfausbeute bei der Pfropfmischpolymerisation und somit des Pfropfgrades des fertigen Pfropfmischpolymerisats (B) ist jedem Fachmann geläufig und kann beispielsweise u.a. durch die Dosiergeschwindigkeit der Monomeren oder durch Reglerzugabe erfolgen (Chauvel, Daniel, ACS Polymer Preprints, 15 (1974), Seite 329 ff.). Bei der Emulsions-Pfropfmischpolymerisation entstehen im allgemeinen etwa 5 bis 15 Gew.%, bezogen auf das Pfropfmischpolymerisat, an freiem, ungepfropftem Styrol/Acrylnitril-Copolymerisat. Der Anteil des Pfropfmischpolymerisats (B) in dem bei der Pfropfmischpolymerisation erhaltenen Polymerisationsprodukt wird nach der weiter unten angegebenen Methode ermittelt.

**Herstellung der erfindungsgemäßen Formmasse:**

Das Mischen der Komponenten (A) und (B) kann nach jeder beliebigen Weise nach allen bekannten Methoden erfolgen. Wenn die Komponenten, z. B. durch Emulsions-Polymerisation hergestellt worden sind, ist es z. B. möglich, die erhaltenen Polymer-Dispersionen miteinander zu vermischen, darauf die Polymerisate gemeinsam auszufällen und das Polymerisat-Gemisch aufzuarbeiten. Vorzugsweise geschieht jedoch das Mischen der Komponenten (A) und (B) durch gemeinsames Extrudieren, Kneten oder Verwalzen der Komponenten, wobei die Komponenten notwendigenfalls zuvor aus der bei der Polymerisation erhaltenen Lösung oder wäßrigen Dispersion isoliert worden sind. Die in wäßriger Dispersion erhaltenen Produkte der Pfropfmischpolymerisation, Komponente (B), können auch nur teilweise entwässert werden und als feuchte Krümel mit der Hartkomponente (A) vermischt werden, wobei dann während des Vermischens die vollständige Trocknung der Pfropfmischpolymerisate erfolgt.

Die erfindungsgemäßen Mischungen aus den Komponenten (A) und (B) können als weitere Komponente (C) alle Zusatz- und/oder Hilfsstoffe enthalten, wie sie für ABS- und ASA-Polymerisate üblich und gebräuchlich sind. Als solche Zusatz- und/oder Hilfsstoffe seien beispielsweise genannt: Füllstoffe, weitere verträgliche Kunststoffe, Farbstoffe oder Pigmente, Antistatika, Antioxidantien, Flammschutzmittel und Schmiermittel. Die Zusatz- und Hilfsstoffe werden in üblichen und wirksamen Mengen, vorzugsweise in Mengen von 0,1 bis zu insgesamt etwa 30 Gew.%, bezogen auf die Mischung (A + B), eingesetzt.

Als Antistatika eignen sich z. B. Polyäthylenglykole, Polypropylenglykole und insbesondere Copolymere aus Äthylenoxid und Propylenoxid. Ferner kommen noch Salze von Alkyl- oder Alkylarylsulfonsäuren oder äthoxylierte langkettige Alkylamine in Frage.

Die erfindungsgemäßen Formmassen lassen sich nach den für die Thermoplastverarbeitung üblichen Verfahren, wie z. B. Extrusion und Spritzgießen, zu den verschiedenartigsten Formkörpern, wie z. B. Gehäuse für Haushaltsgeräte, Telefone, Platten, Rohre und Kinderspielzeug verarbeiten. Wie erwähnt, eignen sich die erfindungsgemäßen Massen dabei insbesondere zur Herstellung von farbigen Formteilen bzw. Formkörpern der genannten Art, wie sie insbesondere bei Gehäusen für Elektrogeräte, Kinderspielzeug und Möbel Anwendung finden.

Die in der vorliegenden Anmeldung beschriebenen Parameter wurden wie folgt bestimmt:

1. Bei den mittleren Teilchengrößen gemäß vorliegender Erfindung handelt es sich in allen Fällen um das Gewichtsmittel der Teilchengrößen, wie sie mittels einer analytischen Ultrazentrifuge entsprechend der Methode von W. Scholtan und H. Lange, Kolloid-Z. und Z.-Polymere, 250 (1972), Seiten 782 - 796, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als $d_{50}$-Wert der integralen Massenverteilung bezeichnet wird, ist dabei als der Teilchendurchmesser definiert, bei dem 50 Gewichtsprozent der Teilchen einen kleineren Durchmesser haben als der Durchmesser, der dem $d_{50}$-Wert entspricht. Ebenso haben dann 50 Gew.% der Teilchen einen größeren Durchmesser als der $d_{50}$-Wert. Zur Charakterisierung der Breite der Teilchengrößenverteilung der Kautschukteilchen werden neben dem $d_{50}$-Wert (mittlerer Teilchendurchmesser) die sich aus der integralen Massenverteilung ergebenden $d_{10}$ und $d_{90}$-Werte herangezogen. Der $d_{10}$- bzw. $d_{90}$-Wert der integralen Massenverteilung ist dabei entsprechend dem $d_{50}$-Wert definiert mit dem Unterschied, daß sie auf 10 bzw. 90 Gew.% der Teilchen bezogen sind. Der Quotient

$$\frac{d_{90} - d_{10}}{d_{50}} = Q$$

stellt ein Maß für die Verteilungsbreite der Teilchengröße dar.

2. Die Ermittlung der Pfropfausbeute und somit des Anteils des Pfropfmischpolymerisats in dem bei der Pfropfmischpolymerisation erhaltenen Produkt erfolgt durch Extraktion dieses Polymerisationsproduktes mit Methyläthylketon bei 25°C. Der Pfropfgrad der Pfropfmischpolymerisate, d.h. der prozentuale Anteil vom im Pfropfmischpolymerisat enthaltenen gepfropften Styrol und Acrylnitril, ergibt sich am einfachsten aus der elementaranalytischen Bestimmung von Stickstoff (aus Acrylnitril) und Sauerstoff (aus Acrylester) im in Methylethylketon unlöslichen Gel.

3. Die Schlagzähigkeit der Formmasse wurde nach DIN 53 453 an gespritzten Normalkleinstäben bei 23°C ermittelt. Die Spritztemperatur für die Normkleinstäbe betrug dabei 250°C.

4. Die Fließfähigkeit in [g/10 Min] wurde anhand des Meltindex nach DIN 53 735 bei 200°C und 21,6 kp beurteilt.

5. Die Viskositätszahlen, VZ, wurden in 0,5 %-iger Lösung in Dimethylformamid als Lösungsmittel bei einer Temperatur von 25°C ermittelt (analog DIN 53 726).

Für die Durchführung der in den Beispielen und Vergleichsversuchen beschriebenen Versuche wurden die folgenden Produkte verwendet:

## Hartkomponente A

Ein Monomeren-Gemisch aus Styrol und Acrylnitril wurde unter üblichen Bedingungen in Lösung polymerisiert. Das erhaltene Styrol/Acrylnitril-Copolymerisat hatte einen Acrylnitril-Gehalt von 35 % und eine Viskositätszahl von 80 ml/g.

## Pfropfmischpolymerisat B, Typ I:

In einem 40 l Rührkessel, der mit einem Ankerrührer ausgestattet ist, werden 12,0 kg destilliertes Wasser, 96 g Na-laurylsulfat und 40 g Stearylalkohol 10 Minuten bei 65°C gerührt. Dazu werden 1,3 kg n-Butylacrylat und 4,5 g t-Butylperneodecanoat gegeben. Nach dem Anspringen der Reaktion läßt man im Verlaufe von 2 Stunden 6,7 kg n-Butylacrylat und 0,3 kg Tricyclodecenylacrylat und vier Stunden nach Beginn der Reaktion 2,2 g t-Butylperneodecanoat in 100 ml n-Hexan zulaufen. Die mittlere Teilchengröße des erhaltenen Latex liegt bei 632 nm, der

$$\frac{d_{90} - d_{10}}{d_{50}} = \text{Q-Wert bei 1,1 und der Feststoffgehalt bei 37 \%}$$

4820 g der Mikrosuspension, 2987 g destilliertes Wasser, 3,86 g t-Butylperoctoat und 22,5 g Na-laurylsulfat werden in einem 10 l Rührgefäß auf 75°C erwärmt. Dazu gibt man im Verlaufe von 4 Stunden kontinuierlich ein Gemisch aus 482 g Styrol und 161 g Acrylnitril. Nach der Zugabe der Monomeren läßt man noch 1 Stunde bei 75°C nachreagieren. Das Pfropf-mischpolymerisat wird durch Fällen mit einer Calciumchloridlösung isoliert, abgeschleudert und im Vakuum getrocknet. Der Anteil des nicht gepfropften S/AN Copolymerisates betrug 15 Gew.-%.

## Pfropfmischpolymerisat B, Typ II:

In einem 40 l Rührkessel, der mit einem Ankerrührer ausgestattet ist, werden 12,0 kg destilliertes Wasser, 96 g Na-laurylsulfat und 40 g Stearylalkohol 10 Minuten bei 65°C gerührt. Dazu werden im Verlaufe von 1 Stunde 8,0 kg n-Butylacrylat, 0,32 kg Tricyclodecenylacrylat und 4,5 g t-Butylperneodecanoat gegeben. 5 Stunden nach Beginn des Zulaufs wird eine Lösung von 3 g t-Butylperneodecanoat in 100 ml n-Hexan zudosiert. Die Reaktion wird bei einem Feststoffgehalt von 36 Gew.% beendet. Die mittlere Teilchengröße liegt bei 756 nm und der

$$\frac{d_{90} - d_{10}}{d_{50}} = \text{Q-Wert bei 1,16.}$$

4,280 kg der Mikrosuspension, 2,987 kg destilliertes Wasser, 2,89 g t-Butylperoctoat und 22,5 g Na-laurylsulfat werden in einem 10 l Rührgefäß auf 75°C erwärmt. Dazu gibt man im Verlaufe von 4 Stunden kontinuierlich ein Gemisch aus 482 g Styrol und 161 g Acrylnitril. Nach der Zugabe der Monomeren läßt man noch 1 Stunde bei 75°C nachreagieren. Das Pfropfmischpolymerisat wird durch Fällen mit einer Calciumchloridlösung gewonnen, abgeschleudert und im Vakuum getrocknet. Der Anteil des nichtgepfropften S/AN Copolymerisates betrug 17 Gew.%, bezogen auf BII, Typ II.

Die Erfindung wird durch die nachfolgenden Beispiele und Vergleichsversuche näher erläutert. Die darin genannten Teile und Prozente beziehen sich, sofern nicht anders angegeben, auf das Gewicht.

## Beispiele 1+2:

Die in der Tabelle genannten Teile der Komponente A sowie B (Typ I und Typ II) wurden in einem Extruder bei 250°C gemischt. An Proben des Extruders werden die in der Tabelle angeführten Parameter bestimmt.

Zum Vergleich sind in der Tabelle die Werte mit aufgenommen worden, die an Formmassen A und B vom Stand der Technik gemäß (3) erhalten wurden. Dabei entspricht Versuch A dem Versuch Nr. 1 des Beispiels 1, Versuch B dem Versuch Nr. 3 des Beispiels 1 von (3).

Aus dem Vergleich der Ergebnisse ist ersichtlich, daß die erfindungsgemäßen Formmassen eine wesentlich verbesserte Alterungsbeständikeit bei gleichzeitig verbessertem Fließverhalten besitzen.

**Tabelle**

| Beispiele | Komponente A [Gew.-Teile] | Komponente B d$_{50}$-Wert [µm] | Q | [Gew.-Teile] | Schmelzindex bei 200°C [g/10 min] | Schlagzähigkeit nach 180 Stunden Bewitterung |
|---|---|---|---|---|---|---|
| 1 | 55 | Typ I 0,632 | 1,1 | 45 | 3,5 | nicht gebrochen |
| 2 | 55 | Typ II 0,756 | 1,16 | 45 | 4,2 | nicht gebrochen |
| Vergleichs-versuche | | | | | | |
| A | 55 | 0,08 | 2,6 | 45$^{x1}$ | 2,5 | 36,2 |
| B | 55 | 0,263 | 0,87 | 45$^{x2}$ | 3,2 | 87,3 |

$^{x1}$ nicht gepfropfter Anteil 7 Gew.-%, bezogen auf Komponente B
$^{x2}$ nicht gepfropfter Anteil 10 Gew.-%, bezogen auf Komponente B

**Patentansprüche**

1. Thermoplastische Formmasse, enthaltend
A) 50 bis 90 Gew.-%, bezogen auf A + B, einer Hartkomponente aus einem oder mehreren Copolymerisaten von Styrol und/oder α-Methylstyrol mit Acrylnitril, wobei diese Copolymerisate 20 bis 40 Gew.-% Acrylnitril einpolymerisiert enthalten,
B) 50 bis 10 Gew.-%, bezogen auf A + B, eines Pfropfcopolymerisats, das gebildet wird aus
B₁) 40 bis 80 Gew.-%, bezogen auf B), mindestens eines vernetzten Acrylester-Polymerisates mit einer mittleren Teilchengröße im Bereich von 0,5 bis 0,8 µm (d₅₀-Wert der integralen Masseverteilung) und einer Glasübergangstemperatur, Tg, unter 0°C, worauf
B₂) 20 bis 60 Gew.-%, bezogen auf B), mindestens einer Mischung von Styrol und Acrylnitril im Gewichtsverhältnis 88 : 12 bis 65 : 35 aufgepfropft ist, wobei
die Pfropfgrundlage B₁) hergestellt worden ist durch Polymerisation unter üblichen Bedingungen des Drucks, der Temperatur und Wasser/Monomerverhältnissen in Gegenwart von üblichen, vernetzend wirkenden Monomeren, wasserunlöslichen Initiatoren in Mengen von 0,01 bis 0,9 Gew.-%, bezogen auf Monomere(s), Emulgatoren und 0,1 bis 3 %, bezogen auf Monomere(s), eines aliphatischen Alkohols mit 10 bis 30 C-Atomen,
dadurch gekennzeichnet, daß man zur Herstellung der Pfropfgrundlage B₁) vor Beginn der Polymerisation (ohne Homogenisierung) eine Mischung aus Wasser, dem Emulgator und dem langkettigen Alkohol durch 5 bis 30 Minuten dauerndes Rühren oberhalb des Schmelzpunktes des Alkohols herstellt und danach unmittelbar die Polymerisation einleitet.
2. Verwendung von Formmassen gemäß Anspruch 1 zur Herstellung von Formteilen.
3. Formteile aus Formmassen gemäß Anspruch 1.

**Claims**

1. A thermoplastic molding material containing
(A) 50 to 90% by weight, based on A + B, of a hard component comprising one or more copolymers of styrene or α-methylstyrene, or of styrene and α-methylstyrene, with acrylonitrile, these copolymers containing from 20 to 40% by weight of acrylonitrile as copolymerized units, and
(B) 50 to 10% by weight, based on A + B, of a graft copolymer derived from
(B₁) 40 to 80% by weight, based on (B), of one or more crosslinked acrylate polymers having a mean particle size of from 0.5 to 0.8 µm (d₅₀ value of the cumulative mass distribution) and a glass transition temperature, Tg, below 0°C, onto which is grafted
(B₂) 20 to 60% by weight, based on (B), of one or more mixtures of styrene and acrylonitrile in a weight ratio of from 88:12 to 65:35,
the grafting base (B₁) having been prepared by polymerization under conventional pressure and temperature conditions and using conventional water/monomer ratios, in the presence of conventional crosslinking monomers, water-insoluble initiators in an amount of from 0.01 to 0.9% by weight, based on the monomer(s), emulsifiers, and 0.1 to 3% by weight, based on the monomer(s), of an aliphatic alcohol of 10 to 30 carbon atoms,
wherein, to prepare the grafting base (B₁), a mixture of water, the emulsifier and the long-chain alcohol is produced by stirring for from 5 to 30 minutes at above the melting point of the alcohol before polymerization is begun (without homogenization), and then polymerization is immediately initiated.
2. The use of a molding material as claimed in claim 1 for the production of moldings.
3. Moldings produced from a molding material as claimed in claim 1.

7

## 0 071 098

### Revendications

1. Matière thermoplastique à mouler, contenant

A) de 50 à 90 % en poids, sur la base de A + B, d'un composant dur constitué par un ou plusieurs copolymères de styrène et/ou d'α-méthylstyrène avec l'acrylonitrile, ces copolymères contenant de 20 à 40 % en poids d'acrylonitrile en liaison polymère,

B) de 50 à 10 % en poids, sur la base de A + B, d'un copolymère greffé, qui est formé de

$B_1$) 40 à 80 % en poids, sur la base de B), d'au moins un polymère d'ester acrylique réticulé ayant une grosseur moyenne de particules dans la gamme de 0,5 à 0,8 μm (valeur $d_{50}$ de la distribution de masse intégrale) et une température de transition vitreuse Tg inférieure à 0°C, sur lequel est greffé

$B_2$) 20 à 60 % en poids, sur la base de B), d'au moins un mélange de styrène et d'acrylonitrile dans un rapport de poids de 88 : 12 à 65 : 35,

la base de greffage $B_1$) ayant été préparée par polymérisation dans des conditions usuelles de pression, de température et de rapport eau/monomère, en présence de monomères réticulants usuels, d'initiateurs non hydrosolubles dans des proportions de 0,01 à 0,9 % en poids par rapport au(x) monomère(s), d'émulsifiants et de 0,1 à 3 %, par rapport au(x) monomère(s), d'un alcool aliphatique à 10 - 30 atomes de C,

caractérisée en ce que pour la préparation de la base de greffage $B_1$), on prépare avant le début de la polymérisation (sans homogénéisation) un mélange d'eau, de l'émulsifiant et de l'alcool à longue chaîne par agitation pendant 5 à 30 mn au-dessus du point de fusion de l'alcool, puis on déclenche immédiatement la polymérisation.

2. Utilisation de matières à mouler selon la revendication pour la fabrication de pièces moulées.

3. Pièces moulées faites de matières à mouler selon la revendication 1.

8